(19) Europäisches Patentamt
European Patent Office
Office européen des brevets

(11) **EP 3 438 730 A1**

(12) **EUROPEAN PATENT APPLICATION**
published in accordance with Art. 153(4) EPC

(43) Date of publication:
**06.02.2019 Bulletin 2019/06**

(21) Application number: **17774332.5**

(22) Date of filing: **15.03.2017**

(51) Int Cl.:
*G02F 1/01* (2006.01)     *B23K 26/064* (2014.01)
*B23K 26/067* (2006.01)     *G02B 21/06* (2006.01)
*G02F 1/37* (2006.01)     *G02F 1/13* (2006.01)

(86) International application number:
**PCT/JP2017/010421**

(87) International publication number:
**WO 2017/169788 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016067863**

(71) Applicant: **Hamamatsu Photonics K.K.**
**Hamamatsu-shi, Shizuoka 435-8558 (JP)**

(72) Inventors:
• **ITO, Haruyasu**
  **Hamamatsu-shi**
  **Shizuoka 435-8558 (JP)**
• **TAKAHASHI, Koji**
  **Hamamatsu-shi**
  **Shizuoka 435-8558 (JP)**
• **WATANABE, Koyo**
  **Hamamatsu-shi**
  **Shizuoka 435-8558 (JP)**

(74) Representative: **Grünecker Patent- und Rechtsanwälte PartG mbB Leopoldstraße 4 80802 München (DE)**

(54) **PULSE LIGHT GENERATION DEVICE, LIGHT IRRADIATION DEVICE, OPTICAL PROCESSING DEVICE, OPTICAL RESPONSE MEASUREMENT DEVICE, MICROSCOPE DEVICE, AND PULSE LIGHT GENERATION METHOD**

(57) A pulsed light generation apparatus 1A includes a dispersing unit 12 for dispersing pulsed light for respective wavelengths, a polarization dependent type spatial light modulator 14 for modulating the dispersed pulsed light in respective wavelengths, and a combining unit 16 for combining wavelength components of the pulsed light output from the spatial light modulator 14. A polarization plane of the pulsed light input to the spatial light modulator 14 is inclined with respect to a polarization direction in which the spatial light modulator 14 has a modulation function. The spatial light modulator 14 causes a time difference between a first polarization component of the pulsed light along the polarization direction and a second polarization component of the pulsed light intersecting with the first polarization component. Thus, a pulsed light generation apparatus that can easily suppress variation in time difference between two pulsed light components is realized.

*Fig.1*

EP 3 438 730 A1

## Description

### Technical Field

The present disclosure relates to a pulsed light generation apparatus, a light irradiation apparatus, an optical processing apparatus, an optical response measurement apparatus, a microscope apparatus, and a pulsed light generation method.

### Background Art

Patent Document 1 discloses a system that generates a plurality of pulsed light components having a time difference, using a spatial light modulator. In this system, the plurality of pulsed light components are generated by controlling a modulation pattern presented in the spatial light modulator. Here, in the case of using a liquid crystal type spatial light modulator in this type of system, in general, the polarization direction of input light into the spatial light modulator and the orientation direction of liquid crystal are matched with each other in order to enhance the modulation efficiency.

### Citation List

### Patent Literature

Patent Document 1: US Patent Application Publication No. 2010/0187208

### Summary of Invention

### Technical Problem

The plurality of pulsed light components having a time difference is applied to, for example, a pump-probe method. The pump-probe method is a technique for observing a photochemical reaction occurring in a sample by light irradiation, and first, the sample is irradiated with pulsed pump light, and the sample is irradiated with pulsed probe light with a slight delay. Thus, the photochemical reaction caused by the pump light can be known by analyzing transmitted light or scattered light of the probe light.

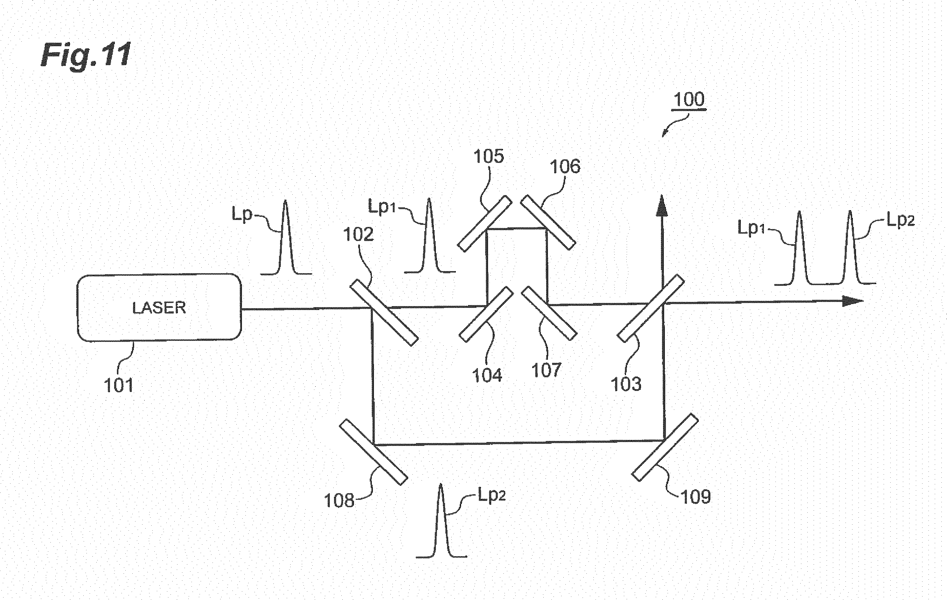

FIG. 11 illustrates a configuration of an apparatus 100 that generates two pulsed light components having a time difference, as an example. The apparatus 100 includes a light source 101, half mirrors 102 and 103, and mirrors 104 to 109.

The light source 101 outputs one pulsed light Lp. The pulsed light Lp is branched into pulsed light $Lp_1$ and pulsed light $Lp_2$ that are two pulsed light components by the half mirror 102. The one pulsed light $Lp_1$ reaches the half mirror 103 through a first optical path including the mirrors 104 to 107. Further, the other pulsed light $Lp_2$ reaches the half mirror 103 through a second optical path including the mirrors 108 and 109. Optical path lengths of these first and second optical paths are slightly different. Therefore, when the pulsed light reaches the half mirror 103, one of the pulsed light $Lp_1$ and the pulsed light $Lp_2$ arrives earlier by a slight time than the other. Thereafter, the pulsed light $Lp_1$ and the pulsed light $Lp_2$ travel again on the same optical path by the half mirror 103.

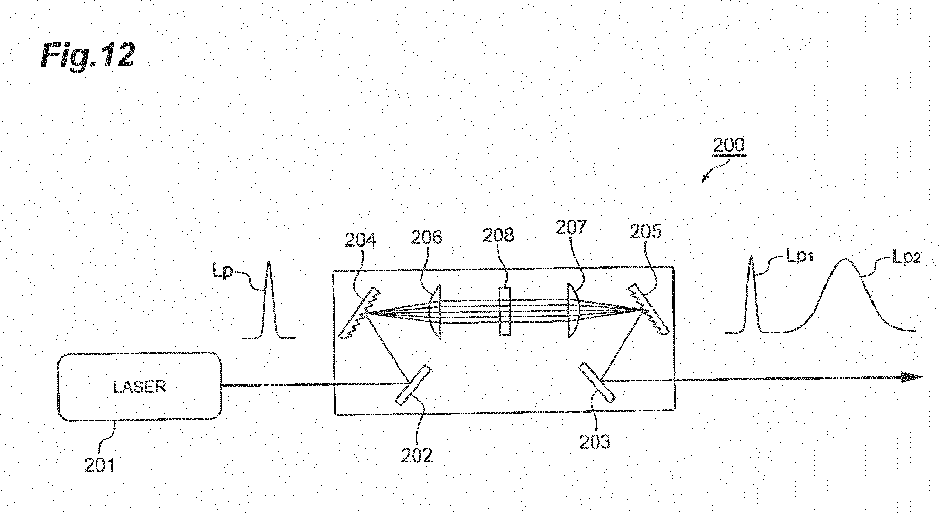

Further, FIG. 12 illustrates a configuration of an apparatus 200 that generates two pulsed light components having a time difference, as another example. The apparatus 200 includes a light source 201, mirrors 202 and 203, dispersive elements 204 and 205 such as diffraction gratings, lenses 206 and 207, and a transmission type spatial light modulator 208.

The light source 201 outputs one pulsed light Lp. After the traveling direction is changed by the mirror 202, the pulsed light Lp is dispersed into wavelength components by the dispersive element 204. Thereafter, the wavelength components of the pulsed light Lp are focused on the spatial light modulator 208 by the lens 206. The wavelength components of the pulsed light Lp output from the spatial light modulator 208 reach the dispersive element 205 while being collimated by the lens 207 and are combined by the dispersive element 205. At this time, when a certain modulation pattern is presented in the spatial light modulator 208, the pulsed light Lp is divided into the pulsed light $Lp_1$ and the pulsed light $Lp_2$ that are the two pulsed light components having a time difference. Thereafter, the pulsed light $Lp_1$ and the pulsed light $Lp_2$ are output after the traveling direction is changed by the mirror 203.

However, in the case of providing two optical paths, as in the example illustrated in FIG. 11, there is a problem that the time difference between the pulsed light $Lp_1$ and the pulsed light $Lp_2$ easily varies due to an influence of vibration of the mirrors 104 to 109, fluctuation of air, and the like. For example, in the pump-probe method, variation in time difference between the pump light and the probe light may become a cause to degrade the temporal resolution.

Further, in the examples illustrated in FIG. 11 and FIG. 12, it is difficult to branch the two pulsed light $Lp_1$ and pulsed light $Lp_2$ and independently detect at least one of them. This becomes a problem depending on the application of the pulsed light generation apparatus. For example, in applying these configurations to the pump-probe method, it is not easy to exclude the pump light and detect only the probe light.

An object of embodiments is to provide a pulsed light generation apparatus, a light irradiation apparatus, an optical processing apparatus, an optical response measurement apparatus, a microscope apparatus, and a pulsed light generation method.

**Solution to Problem**

An embodiment of the present invention is a pulsed light generation apparatus. The pulsed light generation apparatus includes a dispersing unit for dispersing pulsed light for respective wavelengths, a polarization dependent type spatial light modulator for modulating the dispersed pulsed light in respective wavelengths, and a combining unit for combining wavelength components of the pulsed light output from the spatial light modulator, and a polarization plane of the pulsed light input to the spatial light modulator is inclined with respect to a polarization direction in which the spatial light modulator has a modulation function, and the spatial light modulator causes a time difference between a first polarization component of the pulsed light along the polarization direction and a second polarization component of the pulsed light intersecting with the first polarization component.

In the pulsed light generation apparatus, the pulsed light is modulated in respective wavelengths after dispersed into wavelength components. Then, the wavelength components of the pulsed light after modulation are combined. Therefore, an arbitrary time delay can be provided to the pulsed light by controlling a modulation pattern presented in the spatial light modulator. Further, the shape (a time width or the like) of the pulsed light can be changed. In addition, in the pulsed light generation apparatus, the spatial light modulator is of a polarization dependent type, and a polarization plane of the pulsed light to be input to the spatial light modulator is inclined with respect to a polarization direction in which the spatial light modulator has a modulation function. That is, a first polarization component of the pulsed light along the polarization direction is modulated, and a second polarization component of the pulsed light intersecting with the first polarization component is not modulated. Therefore, for example, the time difference is generated between the first polarization component and the second polarization component by providing the time delay to the first polarization component. Thereby, first sub pulsed light including the first polarization component and second sub pulsed light including the second polarization component and having a time difference from the first sub pulsed light are favorably generated.

According to the above pulsed light generation apparatus, the two sub pulsed light components travel on the same optical axis, unlike the apparatus 100 illustrated in FIG. 11, and therefore, the light components are less affected by vibration of the dispersing unit, the spatial light modulator, the combining unit, and other optical elements, fluctuation of air, and the like, and variation in the time difference between the two sub pulsed light components can be suppressed. For example, in the pump-probe method, variation in time difference between pump light and probe light can be suppressed, and temporal resolution can be improved. Further, according to the above pulsed light generation apparatus, polarization planes of the two generated sub pulsed light components are different from each other, and therefore, for example, these sub pulsed light components can be easily branched using a polarization separation element.

Further, another embodiment is a light irradiation apparatus. The light irradiation apparatus includes the pulsed light generation apparatus having the above configuration, and an irradiation optical system for irradiating an object with at least one of first sub pulsed light including the first polarization component and second sub pulsed light including the second polarization component.

Further, another embodiment is an optical processing apparatus. The optical processing apparatus includes the pulsed light generation apparatus having the above configuration, and an irradiation optical system for irradiating a processing object with at least one of first sub pulsed light including the first polarization component and second sub pulsed light including the second polarization component for processing the processing object.

According to the light irradiation apparatus and the optical processing apparatus, the pulsed light generation apparatus having the above configuration is included, and therefore, the object or the processing object can be independently irradiated with at least one of the two sub pulsed light components while variation in time difference between the two sub pulsed light components is suppressed.

Further, another embodiment is an optical response measurement apparatus. The optical response measurement apparatus includes the pulsed light generation apparatus having the above configuration, an irradiation-measurement optical system for irradiating a measurement object with one sub pulsed light of first sub pulsed light including the first polarization component and second sub pulsed light including the second polarization component to cause a photoreaction, and taking out the other sub pulsed light transmitted through the measurement object, and a photodetector for detecting the other sub pulsed light.

According to the optical response measurement apparatus, the pulsed light generation apparatus having the above configuration is included, and therefore, variation in time difference between the two sub pulsed light components can be suppressed. Further, for example, the irradiation-measurement optical system may include a polarization separation unit for separating the one sub pulsed light and the other sub pulsed light, thereby to easily independently detect at least one of the two sub pulsed light components.

Further, another embodiment is an optical response measurement apparatus. The optical response measurement apparatus includes the pulsed light generation apparatus having the above configuration including a wavelength conversion unit, an irradiation-measurement optical system for irradiating a measurement object with one sub pulsed light of first sub pulsed light including the first polarization component and second sub pulsed light including the second polarization component to cause a photoreaction, and taking out the other sub pulsed light transmitted through the measurement object, and a photodetector for detecting the other sub pulsed light, and the irradiation-measurement optical system includes a wavelength filter for separating the one sub pulsed light and the other sub pulsed light. The wavelength conversion unit makes wavelengths of the first polarization component and the second polarization component of the pulsed light output from the combining unit different from each other.

According to the optical response measurement apparatus, the pulsed light generation apparatus having the above configuration is included, and therefore, variation in time difference between the two sub pulsed light components can be suppressed. Further, the irradiation-measurement optical system includes the wavelength filter for separating the one sub pulsed light and the other sub pulsed light, thereby to independently detect at least one of the two sub pulsed light components.

Further, another embodiment is a microscope apparatus. The microscope apparatus includes the pulsed light generation apparatus having the above configuration, an irradiation optical system for irradiating an observation object with at least one sub pulsed light of first sub pulsed light including the first polarization component and second sub pulsed light including the second polarization component, and a photodetector for detecting light output from the observation object with the irradiation of the at least one sub pulsed light.

According to the microscope apparatus, the pulsed light generation apparatus having the above configuration is included, and therefore, the observation object can be irradiated while variation in time difference between the two sub pulsed light components can be suppressed.

An embodiment of the present invention is a pulsed light generation method. The pulsed light generation method includes a dispersion step of dispersing pulsed light for respective wavelengths, a modulation step of modulating the dispersed pulsed light in respective wavelengths using a polarization dependent type spatial light modulator, and a combining step of combining wavelength components of the pulsed light output from the spatial light modulator, and a polarization plane of the pulsed light input to the spatial light modulator is inclined with respect to a polarization direction in which the spatial light modulator has a modulation function, and in the modulation step, a time difference is caused between a first polarization component of the pulsed light along the polarization direction and a second polarization component of the pulsed light intersecting with the first polarization component.

According to the pulsed light generation method, variation in time difference between two pulsed light components can be easily suppressed, similarly to the above pulsed light generation apparatus.

## Advantageous Effects of Invention

According to the embodiments, a pulsed light generation apparatus, a light irradiation apparatus, an optical processing apparatus, an optical response measurement apparatus, a microscope apparatus, and a pulsed light generation method capable of easily suppressing variation in time difference between two pulsed light components can be provided.

## Brief Description of Drawings

[FIG. 1] FIG. 1 is a diagram schematically illustrating a configuration of a pulsed light generation apparatus according to an embodiment.

[FIG 2] FIG. 2 is a perspective view illustrating a configuration of an optical pulse shaping unit.

[FIG. 3] FIG. 3 includes diagrams illustrating (a) an example of a temporal waveform of pulsed light output from a light source, (b) an example of temporal waveforms of two pulsed light components output from a spatial light modulator, and (c) an example of temporal waveforms of two pulsed light components having different temporal waveforms from each other and having a time difference.

[FIG 4] FIG. 4 is a flowchart illustrating an example of a pulsed light generation method.

[FIG. 5] FIG. 5 is a perspective view illustrating a configuration of an optical pulse shaping unit according to a modification of the first embodiment.

[FIG. 6] FIG. 6 is a diagram schematically illustrating a configuration of an optical pulse shaping unit according to a modification of the first embodiment.

[FIG. 7] FIG. 7 is a diagram schematically illustrating a configuration of an optical response measurement apparatus according to a second embodiment.

[FIG. 8] FIG. 8 is a diagram schematically illustrating a configuration of an optical response measurement apparatus according to a modification of the second embodiment.

[FIG 9] FIG. 9 is a diagram schematically illustrating a configuration of an optical processing apparatus according to a third embodiment.

[FIG. 10] FIG. 10 is a diagram schematically illustrating a configuration of a microscope apparatus according to a fourth embodiment.

[FIG. 11] FIG. 11 is a diagram illustrating a configuration of an apparatus that generates two pulsed light components having a time difference.

[FIG. 12] FIG. 12 is a diagram illustrating a configuration of an apparatus that generates two pulsed light components having a time difference.

**Description of Embodiments**

Hereinafter, embodiments of a pulsed light generation apparatus, a light irradiation apparatus, an optical processing apparatus, an optical response measurement apparatus, a microscope apparatus, and a pulsed light generation method will be described in detail with reference to the accompanying drawings. In the description of the drawings, the same elements will be denoted by the same reference signs, and overlapping description will be omitted.

(First Embodiment)

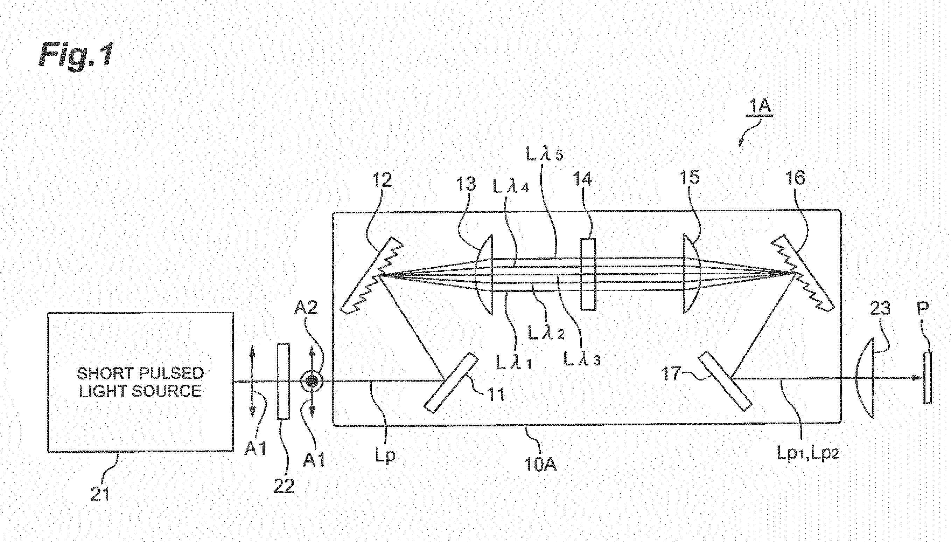

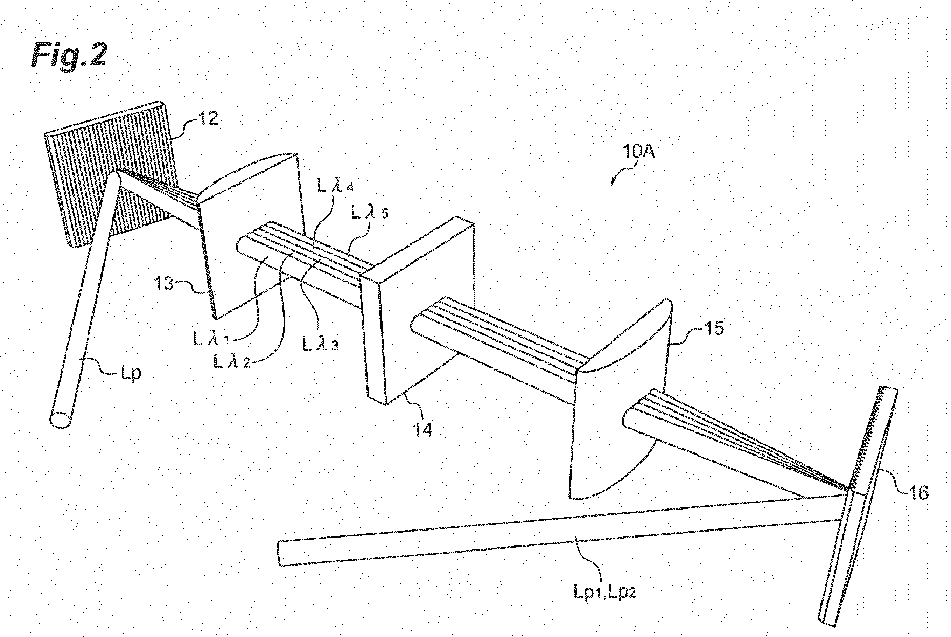

FIG. 1 is a diagram schematically illustrating a configuration of a pulsed light generation apparatus 1A according to an embodiment. FIG. 2 is a perspective view illustrating a configuration of an optical pulse shaping unit 10A of the pulsed light generation apparatus 1A. As illustrated in FIG. 1, the pulsed light generation apparatus 1A is an apparatus that irradiates a sample P with pulsed light $Lp_1$ and pulsed light $Lp_2$, which are two pulsed light components having a time difference, and includes a light source 21, a polarization control unit 22, and the optical pulse shaping unit 10A. Further, as illustrated in FIG. 1 and FIG. 2, the optical pulse shaping unit 10A includes a mirror 11, a dispersing unit 12, a focusing optical system 13, a spatial light modulator (SLM) 14, a collimating optical system 15, a combining unit 16, and a mirror 17.

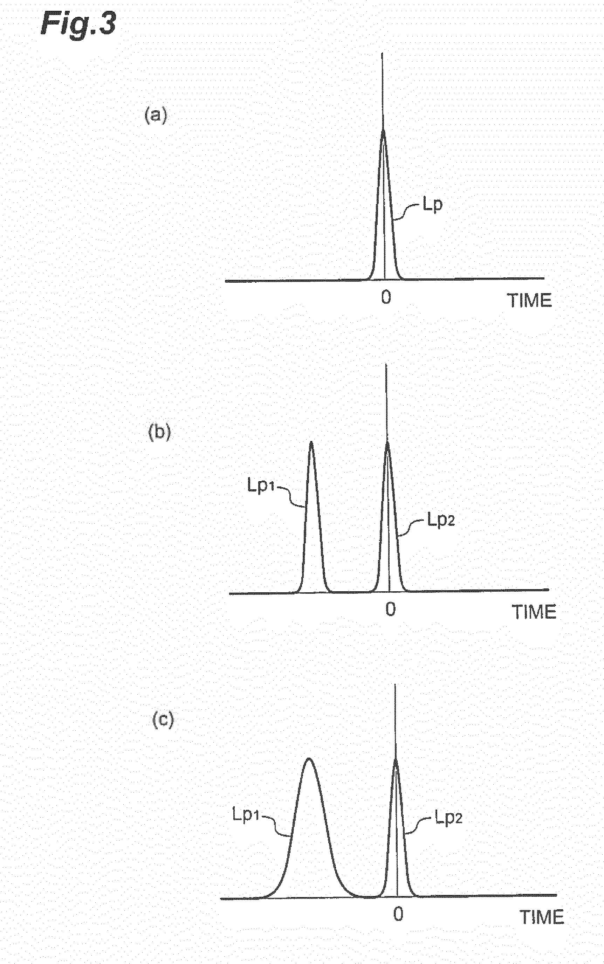

The light source 21 outputs coherent pulsed light Lp such as laser light. The light source 21 is constituted by, for example, a solid-state laser, a fiber laser, or a semiconductor laser. The time width of the pulsed light Lp is, for example, 1 fs to 100 ps. The wavelength of the pulsed light Lp is, for example, 200 nm to 2000 nm. The pulsed light Lp has a linear polarization, and the arrow A1 in the figure represents a polarization direction of the pulsed light Lp. (a) in FIG. 3 is an example of a temporal waveform of the pulsed light Lp output from the light source 21. The vertical axis of (a) in FIG. 3 represents light intensity.

The polarization control unit 22 is an optical element optically coupled to the light source 21 and which rotates a polarization plane of the pulsed light Lp input to the SLM 14. With the configuration, as illustrated in FIG. 1, the pulsed light Lp input to the SLM 14 includes a polarization component in a polarization direction A1 and a polarization component in a polarization direction A2 intersecting with the polarization direction A1. In the present embodiment, the polarization direction A2 is orthogonal to the polarization direction A1. As the polarization control unit 22, for example, a wave plate such as a $\lambda/2$ plate, a polarization element, a Faraday rotator, a variable rotator, or a polarization modulation type spatial light modulator can be used. Further, a polarization plane rotation angle of the polarization control unit 22 is desirably variable. Further, the polarization control unit 22 of the present embodiment is arranged on an optical path in a front stage of the dispersing unit 12 and rotates the polarization plane of the pulsed light Lp input to the dispersing unit 12, however, the arrangement of the polarization control unit 22 is not limited thereto, and the unit may be arranged at any position as long as the position is on the optical path in a front stage of the SLM 14. For example, the polarization control unit 22 may be arranged on the optical path between the dispersing unit 12 and the SLM 14 (more favorably between the focusing optical system 13 and the SLM 14).

The mirror 11 is a total reflection mirror and is arranged on the optical path between the polarization control unit 22 and the dispersing unit 12 and directs a traveling direction of the pulsed light Lp output from the polarization control unit 22 to the dispersing unit 12. Here, the mirror 11 is appropriately provided according to a relative positional relationship between the polarization control unit 22 and the dispersing unit 12, and can be omitted depending on the relationship.

The dispersing unit 12 is an optical element that disperses (spectrally disperses) the pulsed light Lp for respective wavelengths. In FIG. 1 and FIG. 2, five wavelength components $L\lambda_1$ to $L\lambda_5$ are illustrated for easy understanding. In the present embodiment, the dispersing unit 12 is constituted by a dispersive element (for example, a diffraction grating).

In the diffraction grating, diffraction angles are different depending on wavelengths, and therefore, when the pulsed light Lp having a wideband wavelength component is input, the respective wavelength components $L\lambda_1$ to $L\lambda_5$ are diffracted in different directions from one another. The dispersing unit 12 is not limited to the diffraction grating, and various dispersive elements such as a prism can be applied. Further, the dispersing unit 12 may be constituted by a plurality of dispersive elements.

The focusing optical system 13 focuses the respective wavelength components $L\lambda_1$ to $L\lambda_5$ of the pulsed light Lp output while spreading out from the dispersing unit 12 on different positions on the SLM 14. Specifically, the focusing optical system 13 has a lens power in a plane including a wavelength dispersion direction of the dispersing unit 12, and does not have a lens power in a plane perpendicular to the wavelength dispersion direction. As such a focusing optical system 13, for example, a cylindrical lens is used.

The SLM 14 is a transmission type SLM, and modulates the pulsed light after dispersion (dispersed pulsed light) Lp in respective wavelengths. That is, a modulation plane of the SLM 14 includes a plurality of modulation areas respectively corresponding to a plurality of wavelength components, and these modulation areas are arranged in a dispersion direction of the dispersing unit 12. Then, each of the wavelength components $L\lambda_1$ to $L\lambda_5$ is input to the corresponding modulation area, and is independently modulated according to the modulation pattern presented in the modulation area. Further, the SLM 14 has polarization dependency and has a modulation function for a certain polarization component, and does not have the modulation function for other polarization components. As an example, the SLM 14 is a liquid crystal (liquid crystal on silicon; LCOS) type SLM. In the liquid crystal type SLM, a polarization component along an orientation direction of the liquid crystal is modulated, and a polarization component intersecting with the polarization component is not modulated.

The polarization plane of the pulsed light Lp (wavelength components $L\lambda_1$ to $L\lambda_5$) input to the SLM 14 is inclined (rotated) with respect to the polarization direction (that is, the orientation direction) in which the SLM 14 has the modulation function, as a result of being rotated by the polarization control unit 22. A rotation angle of the rotation is, for example, 45°. Therefore, a first polarization component along the polarization direction (orientation direction) A1 in which the SLM 14 has the modulation function is modulated by the SLM 14, but a second polarization component along the polarization direction A2 intersecting with the polarization direction A1 passes through the SLM 14 as it is without being modulated. Therefore, by presenting a phase pattern to be temporally delayed in the SLM 14 and controlling a phase spectrum of the first polarization component, a time difference is caused between pulsed light (first sub pulsed light) $Lp_1$ including the first polarization component and pulsed light (second sub pulsed light) $Lp_2$ including the second polarization component. For example, by performing phase modulation expressed by the following formula (1), a time delay can be caused in the pulsed light $Lp_1$.

[Formula 1]

$$\Phi = \left( \frac{2\pi \times 3 \times 10^8}{\lambda} - \frac{2\pi \times 3 \times 10^8}{\lambda_0} \right) \times \tau \qquad (1)$$

Here, $\Phi$ is the phase, $\lambda$ is the wavelength, $\lambda_0$ is the center wavelength, and $\tau$ is the delay time. (b) in FIG. 3 is an example of temporal waveforms of the pulsed light $Lp_1$ and the pulsed light $Lp_2$ output from the SLM 14.

Here, a phase pattern for changing the temporal waveform of the pulsed light $Lp_1$ (for example, expanding a time width) may further be presented in the SLM 14, by being superimposed on the phase pattern by which the first polarization component is temporally delayed. In this case, as illustrated in (c) in FIG 3, pulsed light $Lp_1$ and pulsed light $Lp_2$ having different temporal waveforms from each other and having a time difference can be easily generated. Here, the temporal waveform of the pulsed light $Lp_1$ can be shaped into an arbitrary waveform, and for example, the pulsed light $Lp_1$ can be further divided into a plurality of pulsed light components (pulse train) or can be formed into a chirped pulse.

The collimating optical system 15 collimates the pulsed light $Lp_1$ and the pulsed light $Lp_2$ output from the SLM 14 toward the combining unit 16. Specifically, the collimating optical system 15 has a lens power in a plane including the wavelength dispersion direction of the dispersing unit 12, and does not have a lens power in a plane perpendicular to the wavelength dispersion direction. As such a collimating optical system 15, for example, a cylindrical lens is used.

The combining unit 16 combines the wavelength components $L\lambda_1$ to $L\lambda_5$ of the pulsed light $Lp_1$ output from the SLM 14 and combines the wavelength components $L\lambda_1$ to $L\lambda_5$ of the pulsed light $Lp_2$ output from the SLM 14. The combining unit 16 of the present embodiment is constituted by one dispersive element (for example, a diffraction grating) provided separately from the dispersing unit 12. In the diffraction grating, the diffraction angles are different depending on the wavelengths, and therefore, when the wavelength components $L\lambda_1$ to $L\lambda_5$ are input at the same angles as the diffraction angles in the dispersing unit 12, the wavelength components $L\lambda_1$ to $L\lambda_5$ are diffracted in the same direction. The combining unit 16 is not limited to the diffraction grating, and various dispersive elements such as a prism can be applied.

The mirror 17 is a total reflection mirror and is arranged on the optical path between the combining unit 16 and the sample P and directs the traveling direction of the pulsed light $Lp_1$ and the pulsed light $Lp_2$ output from the combining unit 16 to the sample P. Here, the mirror 17 is appropriately provided according to a relative positional relationship between the combining unit 16 and the sample P, and can be omitted depending on the relationship.

Ilere, a focusing optical system 23 may be provided between the mirror 17 and the sample P. The focusing optical system 23 focuses the pulsed light $Lp_1$ and the pulsed light $Lp_2$ toward the sample P. By the function of the focusing optical system 23, a focusing point of the pulsed light $Lp_1$ and the pulsed light $Lp_2$ is formed at an arbitrary position of the sample P (for example, inside or on a surface of the sample P).

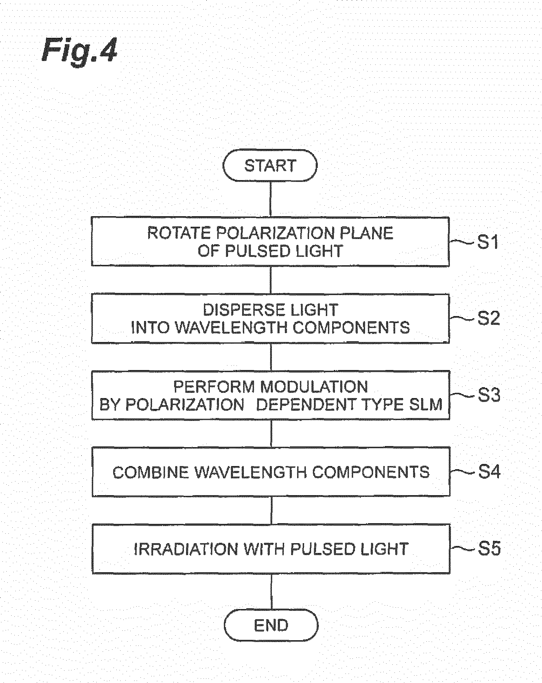

FIG 4 is a flowchart illustrating an example of a pulsed light generation method using the pulsed light generation apparatus 1A of the present embodiment. As illustrated in FIG 4, in this pulsed light generation method, first, the polarization plane of the pulsed light Lp output from the light source 21 is rotated by the polarization control unit 22 (polarization plane rotation step S1). At this time, the pulsed light Lp includes the first polarization component in the polarization direction A1 in which the SLM 14 has the modulation function and the second polarization component in the polarization direction A2 intersecting with the polarization direction A1. Next, the dispersing unit 12 disperses the pulsed light Lp for respective wavelengths (dispersion step S2). Subsequently, the phase of the pulsed light after dispersion (dispersed pulsed light) Lp is modulated in respective wavelengths using the polarization dependent type SLM 14 (modulation step S3). At this time, the first polarization component of the pulsed light Lp is modulated by the SLM 14, but the second polarization component is not modulated. Therefore, a time difference is generated between the first polarization component and the second polarization component of the pulsed light Lp. Thereby, pulsed light $Lp_2$ including the second polarization component and pulsed light $Lp_1$ including the first polarization component and having a time difference from the pulsed light $Lp_2$ are generated. Subsequently, the combining unit 16 respectively combines the wavelength components $L\lambda_1$ to $L\lambda_5$ of the pulsed light $Lp_1$ and the pulsed light $Lp_2$ output from the SLM 14 (combining step S4). Finally, the sample P is irradiated with the pulsed light $Lp_1$ and the pulsed light $Lp_2$ via the focusing optical system 23 (irradiation step S5).

According to the pulsed light generation apparatus 1A and the pulsed light generation method of the above-described present embodiment, the two pulsed light $Lp_1$ and pulsed light $Lp_2$ travel on the same optical axis, and therefore, these are less affected by vibration of the dispersing unit 12, the SLM 14, the combining unit 16, and other optical elements, fluctuation of air, and the like, and variation in the time difference between the two pulsed light $Lp_1$ and pulsed light $Lp_2$ can be suppressed. For example, in the pump-probe method, one of the pulsed light $Lp_1$ and the pulsed light $Lp_2$ is used as the pump light and the other is used as the probe light, thereby suppressing the variation in the time difference between the pump light and the probe light and improving the temporal resolution. Further, the polarization planes of the two generated pulsed light $Lp_1$ and pulsed light $Lp_2$ are different from each other, and therefore, the pulsed light $Lp_1$ and the pulsed light $Lp_2$ can be easily branched using, for example, a polarization separation element.

Further, as illustrated in (c) in FIG 3, the pulse waveform of one pulsed light $Lp_1$ can be easily deformed with respect to the pulse waveform of the other pulsed light $Lp_2$, and further, the time difference between the pulsed light $Lp_1$ and the pulsed light $Lp_2$ can be arbitrarily changed. Further, the time difference between the pulsed light $Lp_1$ and the pulsed light $Lp_2$ can be controlled with higher accuracy than the case of using the branching optical system (see FIG 11). For example, in the case where the phase resolution of the SLM 14 is $2\pi/255$, the temporal resolution of the pulsed light with the center wavelength of 800 nm and the time width of 100 fs is estimated to be about 1 fs. This corresponds to adjusting the optical path length within an error range of 300 nm or less in the branching optical system.

Further, as in the present embodiment, the pulsed light generation apparatus 1A may further include the polarization control unit 22 that rotates the polarization plane of the pulsed light Lp to be input to the SLM 14. With the configuration, the polarization plane of the pulsed light Lp can be easily inclined with respect to the polarization direction (orientation direction) in which the SLM 14 has a modulation function. Further, the polarization plane rotation angle in the polarization control unit 22 is variable, and thus the intensity ratio of the first polarization component and the second polarization component, that is, the intensity ratio of the two pulsed light $Lp_1$ and pulsed light $Lp_2$ can be easily changed.

(First Modification)

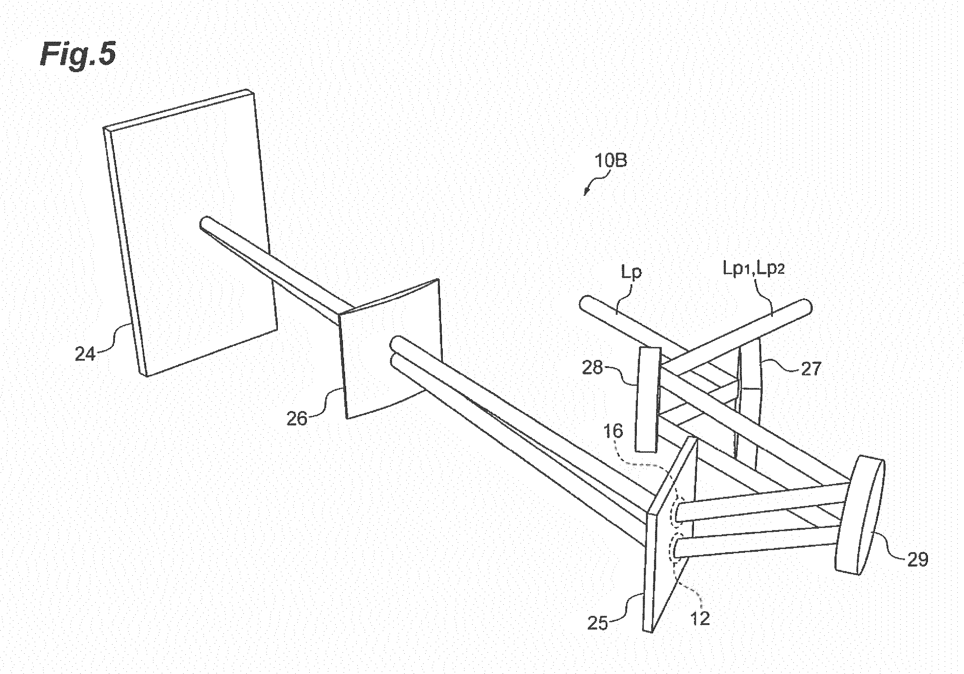

FIG. 5 is a perspective view illustrating a configuration of an optical pulse shaping unit 10B according to a modification of the first embodiment. The main difference of the optical pulse shaping unit 10B from the optical pulse shaping unit 10A (see FIG 2) of the above embodiment is the configuration of an SLM. That is, the optical pulse shaping unit 10A of the above embodiment includes the transmission type SLM 14, whereas the optical pulse shaping unit 10B of the present modification includes a reflection type SLM 24. Here, the function of the SLM 24 is similar to that of the SLM 14 of the above embodiment.

Since the SLM 24 is of a reflection type, the dispersing unit 12 and the combining unit 16 are constituted by a common dispersive element 25 in the present modification. Specifically, the dispersive element 25 is, for example, a diffraction grating, and diffracts the pulsed light Lp before modulation in one area of the dispersive element 25 and diffracts the pulsed light $Lp_1$ and the pulsed light $Lp_2$ after modulation in another area. The focusing optical system 13 and the collimating optical system 15 are also replaced by a common cylindrical lens 26.

The pulsed light Lp input to the optical pulse shaping unit 10B is adjusted in its traveling direction by mirrors 27 to 29 and is then input to the dispersing unit 12 of the dispersive element 25. Here, the pulsed light Lp is dispersed into a plurality of wavelength components and is then input to the SLM 24 via the cylindrical lens 26. Here, a normal direction of a light input plane of the SLM 24 is slightly inclined with respect to an input direction of the pulsed light Lp, and therefore, optical paths of the pulsed light $Lp_1$ and the pulsed light $Lp_2$ output from the SLM 24 are inclined with respect to an optical path of the pulsed light Lp. Therefore, the pulsed light $Lp_1$ and the pulsed light $Lp_2$ pass through an area (combining unit 16) different from the pulsed light Lp in the dispersive element 25. Then, after traveling directions of the pulsed light $Lp_1$ and the pulsed light $Lp_2$ are changed by the mirrors 29 and 28, the pulsed light $Lp_1$ and the pulsed light $Lp_2$ pass through a side of the mirror 27 and are output to a direction different from the input direction of the pulsed light Lp.

In the above-described embodiment, the SLM 14 is of the transmission type, and the dispersing unit 12 and the combining unit 16 are respectively constituted by separate dispersive elements. In contrast, in the present modification, the SLM 24 is of the reflection type, and the dispersing unit 12 and the combining unit 16 are constituted by the common dispersive element 25. Even with such a configuration, the function and effect of the above-described embodiment can be favorably obtained.

(Second Modification)

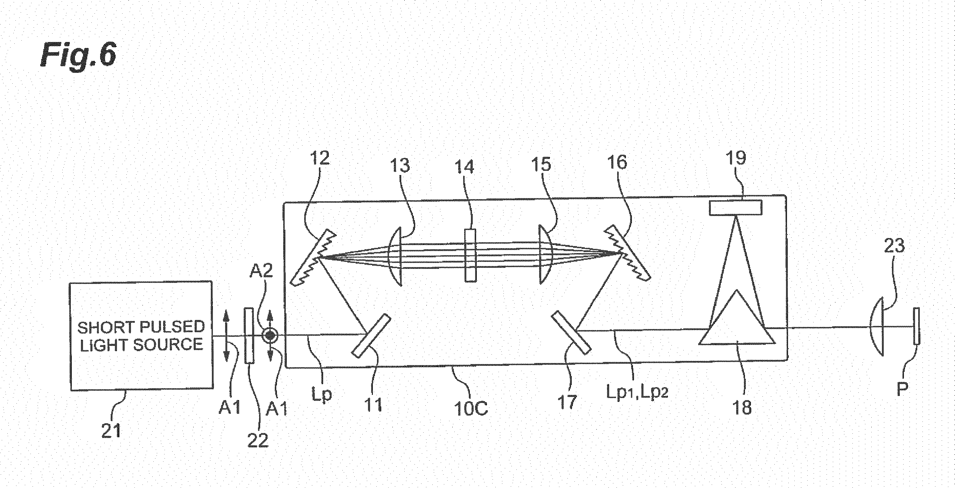

FIG. 6 is a diagram schematically illustrating a configuration of an optical pulse shaping unit 10C according to a modification of the first embodiment. The main difference of the optical pulse shaping unit 10C from the optical pulse shaping unit 10A (see FIG. 1) of the above embodiment is that a reflective element 18 and an SLM 19 for spatial control are provided between the mirror 17 and the focusing optical system 23.

The reflective element 18 reflects the pulsed light $Lp_1$ and the pulsed light $Lp_2$ reflected by the mirror 17 toward the SLM 19. The SLM 19 is a reflection type SLM having polarization dependency, and modulates the pulsed light $Lp_1$ or the pulsed light $Lp_2$ after combining. The SLM 19 modulates the pulsed light $Lp_2$ in the case where a polarization direction (orientation direction) in which the SLM has a modulation function is arranged along a polarization direction A2 along a polarization component (second polarization component) of the pulsed light $Lp_2$. At this time, the pulsed light $Lp_1$ having a first polarization component along a polarization direction A1 intersecting with the polarization direction A2 is output from the SLM 19 without being modulated. On the other hand, the SLM 19 modulates the pulsed light $Lp_1$ in the case where the polarization direction (orientation direction) in which the SLM has a modulation function is arranged along the polarization direction A1 along the polarization component (first polarization component) of the pulsed light $Lp_1$. At this time, the pulsed light $Lp_2$ having the second polarization component along the polarization direction A2 intersecting with the polarization direction A1 is output from the SLM 19 without being modulated.

In this manner, by providing the SLM 19 that spatially modulates the pulsed light $Lp_1$ or the pulsed light $Lp_2$ after combining, the spatial shape and the like of the pulsed light $Lp_1$ or the pulsed light $Lp_2$ can be controlled. Here, the SLM 19 may be a transmission type SLM. In this case, the reflective element 18 becomes unnecessary.

(Second Embodiment)

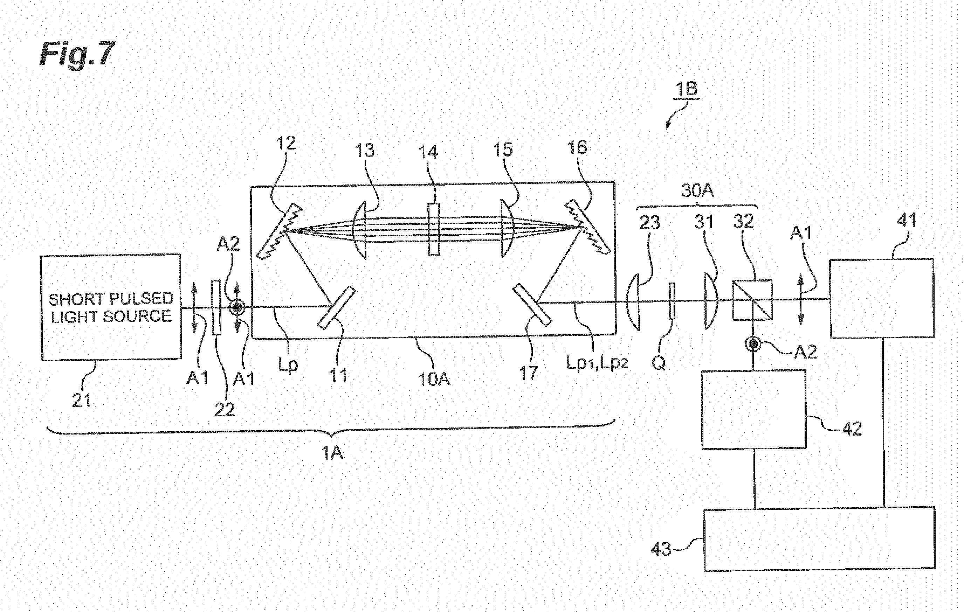

FIG. 7 is a diagram schematically illustrating a configuration of an optical response measurement apparatus 1B according to a second embodiment. The optical response measurement apparatus 1B is an apparatus for measuring a photochemical reaction generated by irradiating a measurement object Q with light by a pump-probe method, and includes the pulsed light generation apparatus 1A of the first embodiment, an irradiation-measurement optical system 30A, and photodetectors 41 and 42.

The irradiation-measurement optical system 30A sequentially irradiates the measurement object Q with a first polarization component of pulsed light, that is, pulsed light (first sub pulsed light) $Lp_1$ and a second polarization component, that is, pulsed light (second sub pulsed light) $Lp_2$ to cause a photoreaction due to the irradiation with one polarization component in the measurement object Q and takes out the other polarization component transmitted through the measurement object Q. Specifically, the irradiation-measurement optical system 30A includes a focusing optical system 23, a collimating optical system 31, and a polarization separation unit 32.

The focusing optical system 23 focuses the pulsed light $Lp_1$ and the pulsed light $Lp_2$ toward the measurement object Q, similarly to the first embodiment. By the function of the focusing optical system 23, a focusing point of the pulsed light $Lp_1$ and the pulsed light $Lp_2$ is formed at an arbitrary position in the measurement object Q (for example, inside or on a surface of the measurement object Q). Further, the collimating optical system 31 is provided at a position sandwiching the measurement object Q with the focusing optical system 23, and collimates the pulsed light $Lp_1$ and the

pulsed light $Lp_2$ transmitted through the measurement object Q.

The polarization separation unit 32 is an optical element having a polarization filter. The polarization separation unit 32 separates one polarization component and the other polarization component included in input light by the polarization filter. Specifically, the polarization separation unit 32 transmits one pulsed light $Lp_1$ of the pulsed light $Lp_1$ and the pulsed light $Lp_2$ having polarization planes intersecting with each other, and reflects the other pulsed light $Lp_2$. The pulsed light $Lp_1$ is input to the photodetector 41, and the pulsed light $Lp_2$ is input to the photodetector 42.

The photodetector 41 generates an electrical signal corresponding to the light intensity of the input pulsed light $Lp_1$. The photodetector 42 generates an electrical signal corresponding to the light intensity of the input pulsed light $Lp_2$. The generated electrical signals are sent to a calculation unit 43. The calculation unit 43 performs calculations necessary for optical response measurement on the basis of at least one of the electrical signals. Here, the calculation unit 43 is electrically coupled to the photodetector 41 and the photodetector 42, and processes detection signals output from the photodetector 41 and the photodetector 42. The calculation unit 43 is a calculation processing circuit or a computer including a calculation processing circuit. The calculation unit 43 is, for example, a personal computer, a smart device, a microcomputer, or a cloud server.

In the pump-probe method, first, a measurement object is irradiated with pump light to start a photochemical reaction. The measurement object is irradiated with probe light with a slight delay, and light transmitted through the measurement object or light scattered from the measurement object is detected and analyzed. With the operation, the state of the measurement object at the time of irradiation with the probe light can be obtained. Assuming that the pulse width of the probe light is, for example, 100 femtoseconds, what is known by this measurement is the state of the object during the 100 femtoseconds. Next, the time difference between the pump light and the probe light is slightly changed, the measurement object is irradiated with the pump light and the probe light again, and the transmitted light or the scattered light is detected and analyzed. By repeating such operations, the state of changes in molecules on and after the start of the chemical reaction can be traced from moment to moment.

In the present embodiment, in the case of using the optical pulse shaping unit 10A only for controlling a time difference, the first polarization component (pulsed light $Lp_1$) may be used as the pump light and the second polarization component (pulsed light $Lp_2$) may be used as the probe light, or the second polarization component (pulsed light $Lp_2$) may be used as the pump light and the first polarization component (pulsed light $Lp_1$) may be used as the probe light. In the case of performing an analysis using a detection result of the first polarization component (pulsed light $Lp_1$) transmitted through the polarization separation unit 32, the second polarization component (pulsed light $Lp_2$) is used as the pump light. Further, in the case of performing an analysis using a detection result of the second polarization component (pulsed light $Lp_2$) reflected in the polarization separation unit 32, the first polarization component (pulsed light $Lp_1$) is used as the pump light.

Further, as to which of the pulsed light $Lp_1$ and the pulsed light $Lp_2$ is used as the pump light, consideration of the types of the photodetectors 41 and 42 is also necessary. In the case of using a spectroscope as the photodetectors 41 and 42, either the pulsed light $Lp_1$ or the pulsed light $Lp_2$ is used as pump light. In contrast, in the case of using a photomultiplier tube, a photodiode, or the like, as the photodetectors 41 and 42, and performing lock-in detection, the pulsed light $Lp_1$ is used as the pump light in order to measure the pulsed light $Lp_2$ that does not cause a time delay while being in synchronization with a trigger signal of the light source 21.

Further, in the case of not only controlling the time difference between the pulsed light $Lp_1$ and the pulsed light $Lp_2$ but also expanding the pulse width of the pulsed light $Lp_1$ in the optical pulse shaping unit 10A, the pulsed light $Lp_1$ is used as the pump light. In the usual pump-probe method, the pulse widths of the pump light and the probe light are equal to each other, and thus a phenomenon after irradiation with light is measured by resolution equivalent to the pulse width, however, in the case of expanding the pulse width of the pulsed light $Lp_1$ as the pump light, a phenomenon during irradiation with light can be measured with shorter temporal resolution than the irradiation time.

According to the optical response measurement apparatus 1B of the above-described present embodiment, the pulsed light generation apparatus 1A of the first embodiment is included, and therefore, variation in the time difference between two pulsed light $Lp_1$ and pulsed light $Lp_2$ (that is, the pump light and the probe light) caused by vibration of an optical element, fluctuation of air, or the like can be suppressed. As a result, the temporal resolution can be improved. Further, the irradiation-measurement optical system 30A includes the polarization separation unit 32 for separating the one polarization component and the other polarization component, thereby to easily independently detect the two pulsed light $Lp_1$ and pulsed light $Lp_2$.

Further, in the conventional pump-probe method, the pump light and the probe light are typically brought to intersect with each other inside the observation object. In that case, only a photoreaction at an intersecting point can be measured, and the sensitivity is low. Further, superimposing focusing positions of the pump light and the probe light with high precision is difficult, and a gap between the focusing positions also becomes a cause of reducing the sensitivity. In contrast, in the present embodiment, the pump light and the probe light propagate on the same axis, and thus their focusing positions coincide with each other with high accuracy, and the sensitivity can be enhanced.

Further, in the conventional pump-probe method, a crossing angle of the pump light and the probe light needs to be made large to be spatially separated in order to prevent interference between the pump light and the probe light, and measurement under a microscope using a lens with a high numerical aperture (NA) such as an objective lens has been difficult. In contrast, in the present embodiment, the polarization planes of the pump light and the probe light intersect with each other and thus do not interfere with each other, and the pump light and the probe light can propagate on the same optical axis, and a lens with a high numerical aperture can be used.

(Second Modification)

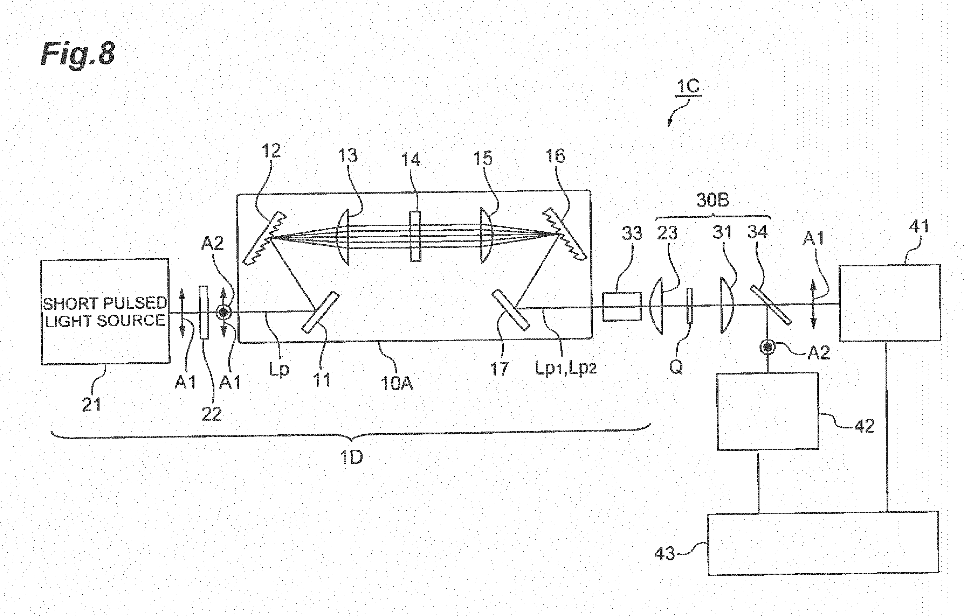

FIG. 8 is a diagram schematically illustrating a configuration of an optical response measurement apparatus 1C according to a modification of the second embodiment. The optical response measurement apparatus 1C includes a pulsed light generation apparatus 1D and an irradiation-measurement optical system 30B. The pulsed light generation apparatus 1D further includes a wavelength conversion unit 33 in addition to the configuration of the pulsed light generation apparatus 1A of the first embodiment. The wavelength conversion unit 33 is an optical element for making wavelengths of a first polarization component, that is, pulsed light (first sub pulsed light) $Lp_1$, and a second polarization component, that is, pulsed light (second sub pulsed light) $Lp_2$ both having passed through the combining unit 16 different. As the wavelength conversion unit 33, for example, a nonlinear optical crystal that generates second harmonic, third harmonic, and the like of the input light is suitably used. Such a nonlinear optical crystal has polarization dependency, and has a wavelength conversion function for a certain polarization direction, however, does not have the wavelength conversion function for the other intersecting polarization direction. The wavelength conversion unit 33 converts the wavelength of the polarization component of one of the first polarization component (pulsed light $Lp_1$) and the second polarization component (pulsed light $Lp_2$), using such a feature, and does not convert the wavelength of the other polarization component.

The irradiation-measurement optical system 30B includes a wavelength filter 34 in place of the polarization separation unit 32 of the second embodiment. The wavelength filter 34 is, for example, a band pass filter, a dichroic mirror, or the like, and separates light in a wavelength band including the one polarization component and light in a wavelength band including the other polarization component. As an example, the wavelength filter 34 transmits light in a wavelength band including the first polarization component (pulsed light $Lp_1$) and reflects light in a wavelength band including the second polarization component (pulsed light $Lp_2$). The pulsed light $Lp_1$ and the pulsed light $Lp_2$ are input to separate photodetectors 41 and 42, respectively. Here, functions of the focusing optical system 23 and the collimating optical system 31 are the same as those of the second embodiment.

According to the optical response measurement apparatus 1C of the present modification, the pulsed light generation apparatus 1A is included, and therefore, a similar effect to the second embodiment can be exhibited. Further, the pulsed light generation apparatus 1D includes the wavelength conversion unit 33 and the irradiation-measurement optical system 30B includes the wavelength filter 34, and therefore, the two pulsed light $Lp_1$ and pulsed light $Lp_2$ can be easily independently detected.

(Third Embodiment)

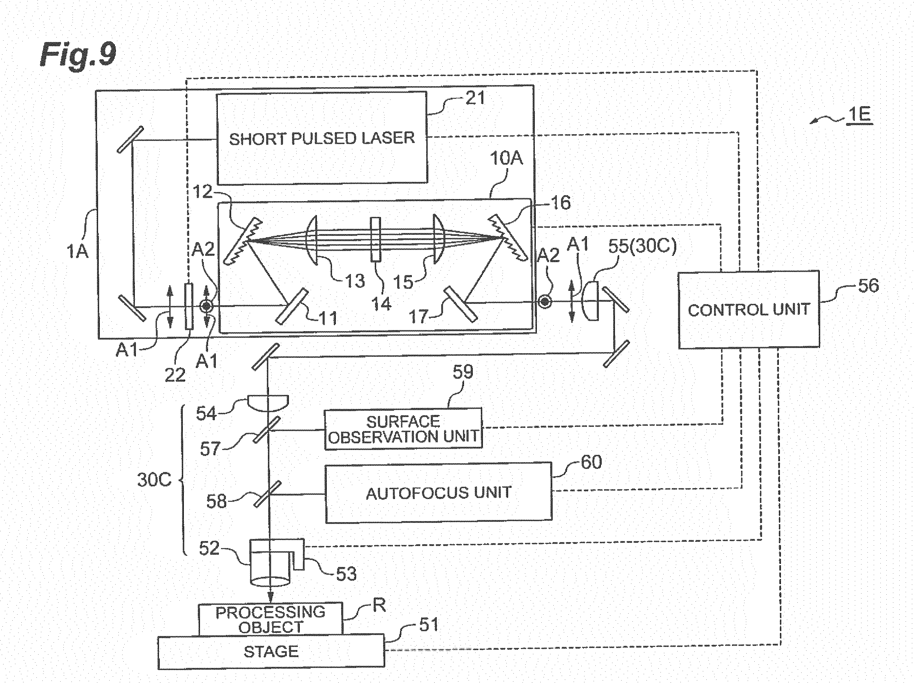

FIG. 9 is a diagram schematically illustrating a configuration of an optical processing apparatus 1E according to a third embodiment. The optical processing apparatus 1E is an apparatus that performs processing such as cutting of a processing object R by irradiating the processing object R with laser light, and includes the pulsed light generation apparatus 1A of the first embodiment, an irradiation optical system 30C, a stage 51 on which the processing object R is placed, a control unit (controller) 56, a surface observation unit 59, and an autofocus unit 60.

The irradiation optical system 30C processes the processing object R by irradiating the processing object R with at least one of a first polarization component, that is, pulsed light (first sub pulsed light) $Lp_1$, and a second polarization component, that is, pulsed light (second sub pulsed light) $Lp_2$, both output from the pulsed light generation apparatus 1A. The irradiation optical system 30C includes, for example, a focusing lens 52, a convex lens 54, and a convex lens 55. The convex lens 55 and the convex lens 54 constitute an imaging optical system, and forms an image of light combined by the combining unit 16 on a pupil plane of the focusing lens 52. With the configuration, spatial distortion caused when the laser light propagates can be decreased. The focusing lens 52 focuses the pulsed light $Lp_1$ and the pulsed light $Lp_2$ from the convex lens 54 to a predetermined processing position (depth) inside the processing object R arranged on the stage 51. The focusing lens 52 is movable by an objective lens drive mechanism 53. The objective lens drive mechanism 53 is, for example, a piezo actuator, a stepping motor, or a linear stage. Further, the processing object R can also be moved with the stage 51. The stage 51 and the objective lens drive mechanism 53 are controlled by the control unit 56.

Polarization separation units 57 and 58 for the surface observation unit 59 and the autofocus unit 60 are arranged in order on an optical path between the convex lens 54 and the focusing lens 52. The surface observation unit 59 receives one of the pulsed light $Lp_1$ and the pulsed light $Lp_2$ reflected from the processing object R via the polarization separation unit 57, and observes a surface of the processing object R. The surface observation unit 59 includes, for example, an area image sensor or a photodiode such as an avalanche photodiode. The autofocus unit 60 receives one of the pulsed light $Lp_1$ and the pulsed light $Lp_2$ reflected from the processing object R via the polarization separation unit 58, and detects a distance to the surface of the processing object R. The autofocus unit 60 includes, for example, an area image sensor or a photodiode such as an avalanche photodiode. The control unit 56 controls output/stop of output of laser light in the light source 21, a rotation angle of the polarization control unit 22, that is, an intensity ratio of the pulsed light $Lp_1$ and the pulsed light $Lp_2$, a phase pattern of the SLM 14, and operations of the surface observation unit 59 and the autofocus unit 60. The control unit 56 is a control processing circuit or a computer including a control processing circuit.

According to the optical processing apparatus 1E of the present embodiment, the pulsed light generation apparatus 1A of the first embodiment is included, and therefore, variation in time difference between two pulsed light $Lp_1$ and pulsed light $Lp_2$ caused by vibration of an optical element, fluctuation of air, or the like can be suppressed. Further, the irradiation optical system 30C includes the polarization separation units 57 and 58 that separate the one polarization component and the other polarization component, and therefore, in the surface observation unit 59 and the autofocus unit 60, the processing object R can be easily independently irradiated with one of the two pulsed light $Lp_1$ and pulsed light $Lp_2$.

(Fourth Embodiment)

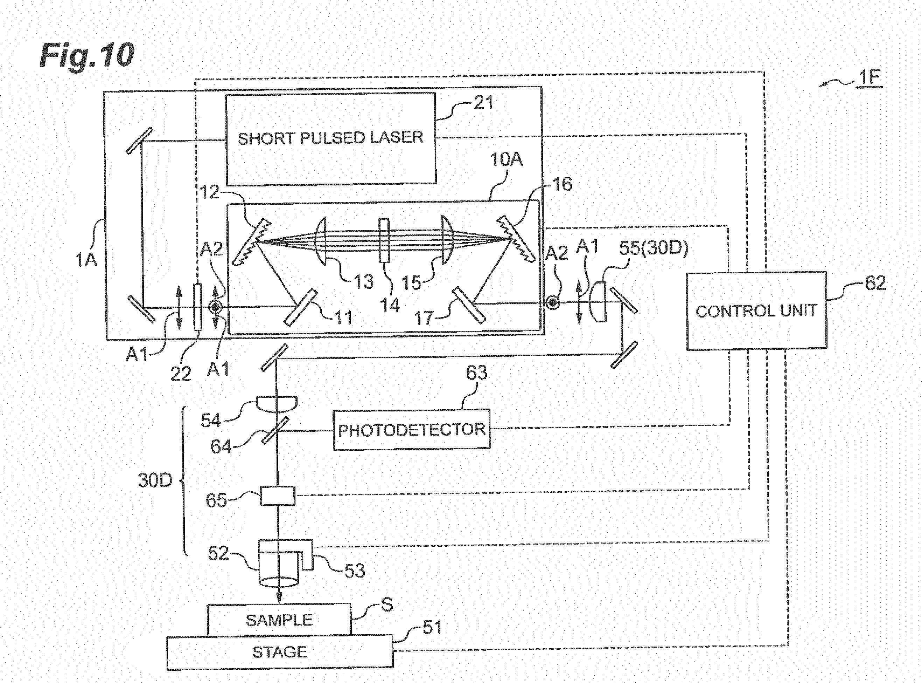

FIG. 10 is a diagram schematically illustrating a configuration of a microscope apparatus 1F according to a fourth embodiment. The microscope apparatus 1F is an apparatus for observing light (fluorescence or the like) caused in an observation object S by continuously irradiating the observation object S with two pulsed light components. In one example, the microscope apparatus 1F is a multiphoton excitation microscope or an STED microscope. The microscope apparatus 1F includes the pulsed light generation apparatus 1A of the first embodiment, an irradiation optical system 30D, a stage 51 on which the observation object S is placed, a control unit (controller) 62, and a photodetector 63.

The irradiation optical system 30D causes the observation object S to generate light such as fluorescence by irradiating the observation object S with a first polarization component, that is, pulsed light (first sub pulsed light) $Lp_1$, and a second polarization component, that is, pulsed light (second sub pulsed light) $Lp_2$, both output from the pulsed light generation apparatus 1A. The irradiation optical system 30D includes, for example, a focusing lens 52, a convex lens 54, and a convex lens 55. The convex lens 55 and the convex lens 54 constitute an imaging optical system, and forms an image of light combined by the combining unit 16 on a pupil plane of the focusing lens 52. With the configuration, spatial distortion caused when the laser light propagates can be decreased. The focusing lens 52 focuses the pulsed light $Lp_1$ and the pulsed light $Lp_2$ from the convex lens 54 to a predetermined observation position (depth) inside the observation object S arranged on the stage 51. The focusing lens 52 is movable by an objective lens drive mechanism 53. Further, the observation object S can also be moved with the stage 51. The stage 51 and the objective lens drive mechanism 53 are controlled by the control unit 62.

A wavelength filter (dichroic mirror) 64 and an optical scanner 65 are sequentially arranged on an optical path between the convex lens 54 and the focusing lens 52. The dichroic mirror 64 transmits the light of the wavelength (that is, the excitation wavelength) of the pulsed light $Lp_1$ and the pulsed light $Lp_2$, and reflects the light of the fluorescence wavelength of the observation object S. The photodetector 63 receives the light such as fluorescence from the observation object S via the dichroic mirror 64, and detects the intensity of the light. The photodetector 63 may be constituted by, for example, a photomultiplier tube (PMT), a photodiode such as an avalanche photodiode, or an area image sensor. The optical scanner 65 scans an observation position (that is, a focusing position of the pulsed light $Lp_1$ and the pulsed light $Lp_2$) in the observation object S. The control unit 62 controls output/stop of output of laser light in the light source 21, a rotation angle of the polarization control unit 22, that is, an intensity ratio of the pulsed light $Lp_1$ and the pulsed light $Lp_2$, a phase pattern of the SLM 14, and an operation of the optical scanner 65. Further, the control unit 62 acquires a detection signal output from the photodetector 63. The control unit 62 is a control processing circuit or a computer including a control processing circuit.

According to the microscope apparatus IF of the present embodiment, the pulsed light generation apparatus 1A of the first embodiment is included, and therefore, variation in time difference between two pulsed light $Lp_1$ and pulsed light $Lp_2$ caused by vibration of an optical element, fluctuation of air, or the like can be suppressed. Therefore, a pulse interval of the excitation light can be controlled with high accuracy.

The pulsed light generation apparatus, the light irradiation apparatus, the optical processing apparatus, the optical response measurement apparatus, the microscope apparatus, and the pulsed light generation method are not limited to the above-described embodiments and modifications, and various other modifications can be made. For example, the above embodiments and modifications may be combined with one another according to necessary purposes and effects. Further, in the above embodiment, the polarization plane of the pulsed light input to the SLM is inclined by the polarization control unit with respect to the polarization direction in which the SLM has the modulation function, however, the SLM itself may be inclined. That is, by inclining the SLM such that the polarization direction in which the SLM has the modulation function is inclined with respect to the polarization plane of the pulsed light input to the SLM, the polarization control unit can be made unnecessary.

Further, in the above embodiments and modifications, an LCOS type SLM has been exemplified as the SLM, however, another liquid crystal type SLM (for example, an electric address type, an optical address type, or the like) may be applied as the SLM.

The pulsed light generation apparatus of the above embodiment is configured to include a dispersing unit for dispersing pulsed light for respective wavelengths, a polarization dependent type spatial light modulator for modulating the dispersed pulsed light in respective wavelengths, and a combining unit for combining wavelength components of the pulsed light output from the spatial light modulator, and a polarization plane of the pulsed light to be input to the spatial light modulator is inclined with respect to a polarization direction in which the spatial light modulator has a modulation function, and the spatial light modulator generates a time difference between a first polarization component of the pulsed light along the polarization direction and a second polarization component of the pulsed light intersecting with the first polarization component.

The above pulsed light generation apparatus may further include a polarization control unit for rotating the polarization plane of the pulsed light input to the spatial light modulator. With the configuration, the polarization plane of the pulsed light can be easily inclined with respect to the polarization direction in which the spatial light modulator has a modulation function. In that case, a polarization plane rotation angle of the polarization control unit may be changeable. With the configuration, an intensity ratio of the first polarization component and the second polarization component, that is, an intensity ratio of two sub pulsed light components can be easily changed. Further, in this case, the polarization control unit may be arranged in any place as long as the place is in a front stage of the spatial light modulator, and for example, may be arranged in a front stage of the dispersing unit, and may rotate the polarization plane of the pulsed light input to the dispersing unit.

In the above pulsed light generation apparatus, the spatial light modulator may be a transmission type spatial light modulator, the dispersing unit may be a dispersive element (first dispersive element), and the combining unit may be a dispersive element (second dispersive element) different from the dispersive element of the dispersing unit. Further, in the above pulsed light generation apparatus, the spatial light modulator may be a reflection type spatial light modulator, the dispersing unit may be a dispersive element, and the combining unit may be the dispersive element of the dispersing unit. In any of the configurations, the configuration of the above pulsed light generation apparatus can be favorably realized.

The above pulsed light generation apparatus may further include a wavelength conversion unit for making wavelengths of the first polarization component and the second polarization component of the pulsed light output from the combining unit different from each other. With the configuration, wavelengths of the two sub pulsed light components output from the pulsed light generation apparatus are different from each other, and these sub pulsed light components can be easily branched using, for example, a wavelength selection filter or the like.

The above pulsed light generation apparatus may further include a second spatial light modulator for modulating the combined pulsed light. With the configuration, spatial shapes and the like of the first polarization component and the second polarization component of the pulsed light can be controlled.

The light irradiation apparatus of the above embodiment is configured to include the pulsed light generation apparatus having the above configuration, and an irradiation optical system for irradiating an object with at least one of first sub pulsed light including the first polarization component and second sub pulsed light including the second polarization component.

The optical processing apparatus of the above embodiment is configured to include the pulsed light generation apparatus having the above configuration, and an irradiation optical system for irradiating a processing object with at least one of first sub pulsed light including the first polarization component and second sub pulsed light including the second polarization component for processing the processing object.

According to the light irradiation apparatus and the optical processing apparatus, the pulsed light generation apparatus having the above configuration is included, and therefore, the object or the processing object can be independently irradiated with at least one of the two sub pulsed light components while variation in time difference between the two sub pulsed light components is suppressed.

The first optical response measurement apparatus of the above embodiment is configured to include the pulsed light generation apparatus having the above configuration, an irradiation-measurement optical system for irradiating a measurement object with one sub pulsed light of first sub pulsed light including the first polarization component and second sub pulsed light including the second polarization component to cause a photoreaction, and taking out the other sub pulsed light transmitted through the measurement object, and a photodetector for detecting the other sub pulsed light.

According to the first optical response measurement apparatus, the pulsed light generation apparatus having the above configuration is included, and therefore, variation in time difference between the two sub pulsed light components can be suppressed. Further, for example, the irradiation-measurement optical system may include a polarization separation unit for separating the one sub pulsed light and the other sub pulsed light, thereby to easily independently detect at least one of the two sub pulsed light components.

The second optical response measurement apparatus of the above embodiment is configured to include the pulsed light generation apparatus having the above configuration including the wavelength conversion unit, an irradiation-measurement optical system for irradiating a measurement object with one sub pulsed light of first sub pulsed light including the first polarization component and second sub pulsed light including the second polarization component to cause a photoreaction, and taking out the other sub pulsed light transmitted through the measurement object, and a photodetector for detecting the other sub pulsed light, and the irradiation-measurement optical system includes a wavelength filter for separating the one sub pulsed light and the other sub pulsed light.

According to the second optical response measurement apparatus, the pulsed light generation apparatus having the above configuration is included, and therefore, variation in time difference between the two sub pulsed light components can be suppressed. Further, the irradiation-measurement optical system includes the wavelength filter for separating the one sub pulsed light and the other sub pulsed light, thereby to independently detect at least one of the two sub pulsed light components.

The microscope apparatus of the above embodiment is configured to include the pulsed light generation apparatus having the above configuration, an irradiation optical system for irradiating an observation object with at least one sub pulsed light of first sub pulsed light including the first polarization component and second sub pulsed light including the second polarization component, and a photodetector for detecting light output from the observation object with the irradiation of the at least one sub pulsed light.

According to the microscope apparatus, the pulsed light generation apparatus having the above configuration is included, and therefore, the observation object can be irradiated while variation in time difference between the two sub pulsed light components can be suppressed.

The pulsed light generation method of the above embodiment is configured to include a dispersion step of dispersing pulsed light for respective wavelengths, a modulation step of modulating the dispersed pulsed light in respective wavelengths using a polarization dependent type spatial light modulator, and a combining step of combining wavelength components of the pulsed light output from the spatial light modulator, and a polarization plane of the pulsed light to be input to the spatial light modulator is inclined with respect to a polarization direction in which the spatial light modulator has a modulation function, and in the modulation step, a time difference is generated between a first polarization component of the pulsed light along the polarization direction and a second polarization component of the pulsed light intersecting with the first polarization component.

According to the pulsed light generation method, variation in time difference between two pulsed light components can be suppressed, similarly to the above pulsed light generation apparatus.

The above pulsed light generation method may further include a polarization plane rotation step of rotating the polarization plane of the pulsed light input to the spatial light modulator. With the configuration, the polarization plane of the pulsed light can be easily inclined with respect to the polarization direction in which the spatial light modulator has a modulation function. In that case, a polarization plane rotation angle in the polarization plane rotation step may be changeable. With the configuration, an intensity ratio of the first polarization component and the second polarization component, that is, an intensity ratio of two sub pulsed light components can be easily changed. Further, in this case, the polarization plane rotation step may be performed before the dispersion step or between the dispersion step and the modulation step.

In the above pulsed light generation method, the spatial light modulator may be a transmission type spatial light modulator, and the dispersion step and the combining step may be performed by different dispersive elements. Further, in the above pulsed light generation method, the spatial light modulator may be a reflection type spatial light modulator, and the dispersion step and the combining step may be performed by the same dispersive element. In any of the configurations, the configuration of the above pulsed light generation method can be favorably realized.

The above pulsed light generation method may further include a wavelength conversion step of making wavelengths of the first polarization component and the second polarization component of the pulsed light combined in the combining step different from each other. With the configuration, wavelengths of the two sub pulsed light components obtained in the combining step are different from each other, and these sub pulsed light components can be easily branched using, for example, a wavelength selection filter or the like.

The above pulsed light generation method may further include a second modulation step of modulating the pulsed light obtained in the combining step by a second spatial light modulator. With the configuration, spatial shapes and the like of the first polarization component and the second polarization component of the pulsed light can be controlled.

The light irradiation method of the above embodiment is configured to include the pulsed light generation method having the above configuration, and an irradiation step of irradiating an object with at least one of first sub pulsed light including the first polarization component and second sub pulsed light including the second polarization component.

The optical processing method of the above embodiment is configured to include the pulsed light generation method having the above configuration, and an irradiation step of irradiating a processing object with at least one of first sub pulsed light including the first polarization component and second sub pulsed light including the second polarization component for processing the processing object.

According to the light irradiation method and the optical processing method, the pulsed light generation method having the above configuration is included, and therefore, the object or the processing object can be independently irradiated with at least one of the two sub pulsed light components while variation in time difference between the two sub pulsed light components is suppressed.

The first optical response measurement method of the above embodiment is configured to include the pulsed light generation method having the above configuration, an irradiation-measurement step of irradiating a measurement object with one sub pulsed light of first sub pulsed light including the first polarization component and second sub pulsed light including the second polarization component to cause a photoreaction, and taking out the other sub pulsed light transmitted through the measurement object, and a detection step of detecting the other sub pulsed light.

According to the first optical response measurement method, the pulsed light generation method having the above configuration is included, and therefore, variation in time difference between the two sub pulsed light components can be suppressed. Further, for example, the irradiation-measurement step may include a polarization separation step of separating the one sub pulsed light and the other sub pulsed light, thereby to easily independently detect at least one of the two sub pulsed light components.

The second optical response measurement method of the above embodiment is configured to include the pulsed light generation method having the above configuration including the wavelength conversion step, an irradiation-measurement step of irradiating a measurement object with one sub pulsed light of first sub pulsed light including the first polarization component and second sub pulsed light including the second polarization component to cause a photoreaction, and taking out the other sub pulsed light transmitted through the measurement object, and a detection step of detecting the other sub pulsed light, and in the irradiation-measurement step, the one sub pulsed light and the other sub pulsed light are separated by a wavelength filter.

According to the second optical response measurement method, the pulsed light generation method having the above configuration is included, and therefore, variation in time difference between the two sub pulsed light components can be suppressed. Further, in the irradiation-measurement step, the one sub pulsed light and the other sub pulsed light are separated by the wavelength filter, and therefore, at least one of the two sub pulsed light components can be independently detected.

The microscope method of the above embodiment is configured to include the pulsed light generation method having the above configuration, an irradiation step of irradiating an observation object with at least one sub pulsed light of first sub pulsed light including the first polarization component and second sub pulsed light including the second polarization component, and a detection step of detecting light output from the observation object with the irradiation of the at least one sub pulsed light.

According to the microscope method, the pulsed light generation method having the above configuration is included, and therefore, the observation object can be irradiated while variation in time difference between the two sub pulsed light components can be suppressed.

**Industrial Applicability**

The embodiments can be used as a pulsed light generation apparatus, a light irradiation apparatus, an optical processing apparatus, an optical response measurement apparatus, a microscope apparatus, and a pulsed light generation method.

**Reference Signs List**

1A - pulsed light generation apparatus, 1B, 1C - optical response measurement apparatus, 1D - pulsed light generation apparatus, 1E - optical processing apparatus, 1F - microscope apparatus, 10A, 10B, 10C - optical pulse shaping unit, 11, 17 - mirror, 12 - dispersing unit, 13 - focusing optical system, 14, 19, 24 - spatial light modulator (SLM), 15 - collimating optical system, 16 - combining unit, 21 - light source, 22 - polarization control unit, 23 - focusing optical system, 25 - dispersive element, 26 - cylindrical lens, 27 - 29 - mirror, 30A, 30B - irradiation-measurement optical system, 30C, 30D - irradiation optical system, 31 - collimating optical system, 32 - polarization separation unit, 33 - wavelength conversion unit, 34 - wavelength filter, 41, 42 - photodetector, 43 - calculation unit, 51 - stage, 52 - focusing lens, 53 - objective lens drive mechanism, 54 - convex lens, 55 - convex lens, 56 - control unit, 57, 58 - polarization separation unit, 59 - surface observation unit, 60 - autofocus unit, 62 - control unit, 63 - photodetector, 64 - dichroic mirror, 65 - optical scanner, A1, A2 - polarization direction, Lp, $Lp_1$, $Lp_2$ - pulsed light, $L\lambda_1$ - $L\lambda_5$ - wavelength component, P - sample, Q - measurement object, R - processing object, S - observation object.

**Claims**

1. A pulsed light generation apparatus comprising:

a dispersing unit for dispersing pulsed light for respective wavelengths;
a polarization dependent type spatial light modulator for modulating the dispersed pulsed light in respective wavelengths; and
a combining unit for combining wavelength components of the pulsed light output from the spatial light modulator, wherein
a polarization plane of the pulsed light input to the spatial light modulator is inclined with respect to a polarization direction in which the spatial light modulator has a modulation function, and
the spatial light modulator causes a time difference between a first polarization component of the pulsed light along the polarization direction and a second polarization component of the pulsed light intersecting with the first polarization component.

2. The pulsed light generation apparatus according to Claim 1, further comprising a polarization control unit for rotating the polarization plane of the pulsed light input to the spatial light modulator.

3. The pulsed light generation apparatus according to Claim 2, wherein a polarization plane rotation angle of the polarization control unit is changeable.

4. The pulsed light generation apparatus according to Claim 2 or 3, wherein the polarization control unit rotates the polarization plane of the pulsed light input to the dispersing unit.

5. The pulsed light generation apparatus according to any one of Claims 1 to 4, wherein
the spatial light modulator is a transmission type spatial light modulator, and
the dispersing unit includes a first dispersive element, and the combining unit includes a second dispersive element different from the first dispersive element.

6. The pulsed light generation apparatus according to any one of Claims 1 to 4, wherein
the spatial light modulator is a reflection type spatial light modulator, and
the dispersing unit includes a dispersive element, and the combining unit includes the dispersive element.

7. The pulsed light generation apparatus according to any one of Claims 1 to 6, further comprising a wavelength conversion unit for making wavelengths of the first polarization component and the second polarization component of the pulsed light output from the combining unit different from each other.

8. The pulsed light generation apparatus according to any one of Claims 1 to 7, further comprising a second spatial light modulator for modulating the combined pulsed light.

9. A light irradiation apparatus comprising:

the pulsed light generation apparatus according to any one of Claims 1 to 8; and
an irradiation optical system for irradiating an object with at least one of first sub pulsed light including the first polarization component and second sub pulsed light including the second polarization component.

10. An optical processing apparatus comprising:

the pulsed light generation apparatus according to any one of Claims 1 to 8; and
an irradiation optical system for irradiating a processing object with at least one of first sub pulsed light including the first polarization component and second sub pulsed light including the second polarization component for processing the processing object.

11. An optical response measurement apparatus comprising:

the pulsed light generation apparatus according to any one of Claims 1 to 8;
an irradiation-measurement optical system for irradiating a measurement object with one sub pulsed light of first sub pulsed light including the first polarization component and second sub pulsed light including the second polarization component to cause a photoreaction, and taking out the other sub pulsed light transmitted through the measurement object; and

a photodetector for detecting the other sub pulsed light.

12. The optical response measurement apparatus according to Claim 11, wherein the irradiation-measurement optical system includes a polarization separation unit for separating the one sub pulsed light and the other sub pulsed light.

13. An optical response measurement apparatus comprising:

the pulsed light generation apparatus according to Claim 7;

an irradiation-measurement optical system for irradiating a measurement object with one sub pulsed light of first sub pulsed light including the first polarization component and second sub pulsed light including the second polarization component to cause a photoreaction, and taking out the other sub pulsed light transmitted through the measurement object; and

a photodetector for detecting the other sub pulsed light, wherein

the irradiation-measurement optical system includes a wavelength filter for separating the one sub pulsed light and the other sub pulsed light.

14. A microscope apparatus comprising:

the pulsed light generation apparatus according to any one of Claims 1 to 8;

an irradiation optical system for irradiating an observation object with at least one sub pulsed light of first sub pulsed light including the first polarization component and second sub pulsed light including the second polarization component; and

a photodetector for detecting light output from the observation object with the irradiation of the at least one sub pulsed light.

15. A pulsed light generation method comprising:

a dispersion step of dispersing pulsed light for respective wavelengths;

a modulation step of modulating the dispersed pulsed light in respective wavelengths using a polarization dependent type spatial light modulator; and

a combining step of combining wavelength components of the pulsed light output from the spatial light modulator, wherein

a polarization plane of the pulsed light input to the spatial light modulator is inclined with respect to a polarization direction in which the spatial light modulator has a modulation function, and

in the modulation step, a time difference is caused between a first polarization component of the pulsed light along the polarization direction and a second polarization component of the pulsed light intersecting with the first polarization component.

16. The pulsed light generation method according to Claim 15, further comprising a polarization plane rotation step of rotating the polarization plane of the pulsed light input to the spatial light modulator.

Fig.1

*Fig.2*

EP 3 438 730 A1

*Fig.3*

(a)

Lp

0          TIME

(b)

Lp1

Lp2

0          TIME

(c)

Lp1

Lp2

0          TIME

*Fig.4*

```
                    ┌─────────┐
                    │  START  │
                    └─────────┘
                         │
        ┌────────────────────────────────────┐
        │      ROTATE POLARIZATION PLANE      │──S1
        │          OF PULSED LIGHT            │
        └────────────────────────────────────┘
                         │
        ┌────────────────────────────────────┐
        │           DISPERSE LIGHT            │──S2
        │    INTO WAVELENGTH COMPONENTS       │
        └────────────────────────────────────┘
                         │
        ┌────────────────────────────────────┐
        │         PERFORM MODULATION          │──S3
        │ BY POLARIZATION  DEPENDENT TYPE SLM │
        └────────────────────────────────────┘
                         │
        ┌────────────────────────────────────┐
        │   COMBINE WAVELENGTH COMPONENTS     │──S4
        └────────────────────────────────────┘
                         │
        ┌────────────────────────────────────┐
        │    IRRADIATION WITH PULSED LIGHT    │──S5
        └────────────────────────────────────┘
                         │
                    ┌─────────┐
                    │   END   │
                    └─────────┘
```

Fig.5

EP 3 438 730 A1

**Fig.6**

Fig.7

EP 3 438 730 A1

*Fig.8*

EP 3 438 730 A1

# Fig.9

SHORT PULSED LASER 21

10A

12

16

1A

A2

A1

55(30C)

13 15

14

A2

A1

11

17

56

CONTROL UNIT

A1

22

A1

54

57

SURFACE
OBSERVATION UNIT 59

30C

58

AUTOFOCUS UNIT 60

52

53

PROCESSING
OBJECT R

STAGE 51

1E

EP 3 438 730 A1

EP 3 438 730 A1

# Fig.10

SHORT PULSED LASER — 21

1F

10A

16

12

1A

13  14  15

A2  A2  A1

11  17

A1

22  A1

55(30D)

CONTROL UNIT — 62

54

64

PHOTODETECTOR — 63

30D

65

52

53

SAMPLE — S

STAGE — 51

# Fig.11

Fig.12

## INTERNATIONAL SEARCH REPORT

| International application No. |
| --- |
| PCT/JP2017/010421 |

A.   CLASSIFICATION OF SUBJECT MATTER
*G02F1/01*(2006.01)i, *B23K26/064*(2014.01)i, *B23K26/067*(2006.01)i, *G02B21/06*(2006.01)i, *G02F1/37*(2006.01)i, *G02F1/13*(2006.01)n

According to International Patent Classification (IPC) or to both national classification and IPC

B.   FIELDS SEARCHED

Minimum documentation searched (classification system followed by classification symbols)
G02F1/00-1/125, B23K26/064, B23K26/067, G02B21/06, G02F1/37-1/39, G02F1/13

Documentation searched other than minimum documentation to the extent that such documents are included in the fields searched
Jitsuyo Shinan Koho          1922–1996   Jitsuyo Shinan Toroku Koho    1996–2017
Kokai Jitsuyo Shinan Koho    1971–2017   Toroku Jitsuyo Shinan Koho    1994–2017

Electronic data base consulted during the international search (name of data base and, where practicable, search terms used)
JSTPlus/JST7580(JDreamIII)

C.   DOCUMENTS CONSIDERED TO BE RELEVANT

| Category* | Citation of document, with indication, where appropriate, of the relevant passages | Relevant to claim No. |
| --- | --- | --- |
| X<br>Y<br>A | E. Frumker, et. al., "Femtosecond pulse shaping using a 2D liquid crystal spatial light modulator", LASERS AND ELECTRO-OPTICS, 2007. CLEO 2007 CONFERENCE ON, 2007.05.06, CtuFF5 | 1,6,15<br>7,9-14<br>8 |
| X<br>Y<br>A | US 2010/0321615 A1 (THORNES, J.J., et. al.), 23 December 2010 (23.12.2010), paragraphs [0016] to [0026]; fig. 1 & EP 2264839 A2 | 1,5,15<br>7,9-14<br>8 |
| X<br>Y<br>A | US 2009/0285582 A1 (H.Miao, et.al.), 19 November 2009 (19.11.2009), paragraphs [0028] to [0048]; fig. 3 (Family: none) | 1-5,15-16<br>7,9-14<br>8 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 May 2017 (24.05.17) | 06 June 2017 (06.06.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
| --- | --- |

Form PCT/ISA/210 (second sheet) (January 2015)

**INTERNATIONAL SEARCH REPORT**

| International application No. |
| --- |
| PCT/JP2017/010421 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y<br>A | JP 2011-517299 A  (Imra America, Inc.),<br>02 June 2011 (02.06.2011),<br>paragraphs [0098] to [0108]; fig. 5c-1<br>& JP 2014-37006 A      & JP 2017-24083 A<br>& US 2010/0025387 A1    & US 2016/0067822 A1<br>& US 2007/0051706 A1    & US 2010/0012631 A1<br>& US 2010/0084384 A1    & US 2010/0086741 A1<br>& US 2013/0095260 A1    & US 2013/0183474 A1<br>& US 2014/0004318 A1    & WO 2009/114375 A2<br>paragraphs [114] to [133]; fig. 5c-1 | 7,9-10<br>8 |
| Y<br>A | JP 2015-15340 A  (The University of Tokyo),<br>22 January 2015 (22.01.2015),<br>paragraphs [0037] to [0073]; fig. 1<br>(Family: none) | 11-12<br>8 |
| Y<br>A | JP 2006-267651 A  (Olympus Corp.),<br>05 October 2006 (05.10.2006),<br>paragraphs [0048] to [0053]; fig. 3<br>(Family: none) | 13-14<br>8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100187208 A